# EUROPEAN PATENT SPECIFICATION

(11) **EP 0 494 039 B1**
(45) Date of publication and mention of the grant of the patent: **05.07.1995**
(21) Application number: 91500135.8
(22) Date of filing: 28.11.1991
(51) Int. Cl.: B28D 1/04, B27B 5/24, B23D 59/02

(54) **Mitre saw with non-feedable circular saw blade**
Gehrungssäge mit nicht verschiebbarem Kreissägeblatt
Scie d'onglets à lame de scie circulaire

(30) Priority: 02.01.1991 ES 9100004
(43) Date of publication of application: 08.07.1992
(73) Proprietor: ALBA MAQUINARIA PARA LA CONSTRUCCION, S.A., E-48016 Sondika (Bizkaia) (ES)
(72) Inventor: Elejaga, José Miguel, E-48990 Getxo (Bizkaia) (ES)
(74) Representative: Urteaga Simarro, José Antonio

(56) References cited:
- FR-A- 2 560 109
- US-A- 1 807 216
- US-A- 3 807 095
- US-A- 4 428 159

## Description

The invention deals with cutting-mitring machines for constructions materials, terrazzo, paving and floor tiles, flags, ceramic and stony materials, etc.

Machines of this kind are known, which entail a motor connected to a work head and to a cutting disc, which forms a whole and remains fixed and raised above a work table. On the work table there is a slide which receives the parts to be worked, in such a way that when the slide traverses along a set of guides, the part is cut by the machine by means of the cutting disc.

In the machines which are known of the type described, there are some disadvantages. The artificial pivoting point of the work head is usually situated at the top in a raised position, with which, on pivoting the work head, the cutting disc is displaced outside the position of the original cut. This displacement from the line of the original cut makes it necessary to move the material to another position if wishing to make a second cut at a different angle from the first, for example in the case of mitre cutting.

On establishing the pivoting of the head and the disc to the classic cutting positions of 0^{º} and 45^{º}, it was necessary to move the material to be cut in order to pass from one cutting angle to the other. Moreover, on occasions, this movement meant changing the cutting face of the material to be worked, which in the case of enamelled parts increases the problems, as the logical cutting of these parts should always be carried out on the enamelled face.

On the other hand, in these conventional machines the slide is usually provided, for the reasons explained, with two slots, one vertical and the other with an angle of 45^{º} for mitre cutting separate from the first.

Another very widespread disadvantage is in the difficulty of adapting the machine to cutting discs of different diameters. There are usually two diameters, of 300 and 350 millimetres, which means that to change from one to the other, it is necessary to raise or lower the work head approximately 25 millimetres.

More recently, other cutting-mitring machines have been known, based on a work head placed at one longitudinal end of the machine, which allowed the work head to pivot with the disc without any substantial variation in the cutting line. However, these machines limited the free traverse of the work-holder slide and also presented many difficulties when proceeding to change the discs.

Through the publication FR-A- 2 560 109 a machine is known with a horizontal-transversal arm in relation to the table on which the parts to be cut are situated, with a head with a motor and a cutting disc being situated at the end of the said arm. The head has two protuberances at different angles, which are capable of receiving the horizontal arm in order to situate the head in two different positions. In one of these positions the motor is situated with the cutting disc at an angle of 90^{º} in relation to the table and in the other at an angle of 45^{º}.

This machine has several disadvantages. For example, in order to modify the position of the cutting disc it is necessary to extract the head from its housing on one protuberance of the arm and house it on the other one.

Another disadvantage is that the cutting disc can only be situated in two positions in relation to the table, one at 90^{º} and the other at 45^{º}, while also modifying the position of the lower end of the cutting disc.

A machine is also known by means of patent US-A- 1 807 216 which succeeds in situating the disc at any angle between 0^{º} and 45^{º} without modifying the position of the lower end of the cutting disc.

Nonetheless, it is of an extraordinary mechanical complexity, also needing a conveyor belt for the material to be cut, since it has two marks fixed to the bench, placed at a certain distance, between which the motor and the cutting disc are situated, with both resting on an arm which changes position.

The turning of the motor is carried out by means of two slides in the shape of a circular sector, which move on two protuberances, also in the shape of a circular sector, which form part of the frames themselves. In order to move the slides, a flywheel is used, with a pinion that travels along a rack cut into a slot in one of the frames. It also requires a set of bolts needed for fixing the slides in the position desired.

The whole of this machine is, as was mentioned previously, both very complex and costly, since it has different mechanisms such as frames, guides and slides, motor holder arm, flywheel, pinion, slot, rack and fixing bolts.

One fundamental aim of the invention is to overcome all the above mentioned disadvantages and inconveniences.

A second object of the invention is an original arrangement of the work head which holds the motor and the cutting disc, which leaves the space on the table completely free for the work-holder slide to traverse.

A third object of the invention is the fact of the very simple way in which the cutting line is constant is achieved with any angle at which the cutting disc is applied.

A fourth object of the invention is the easy replacement of the cutting discs for the usual diameters of 350 and 300 m.m., as well as the automatic adaptation of the work head.

A fifth object of the invention is the arrangement of a simple and efficient mechanism, which includes the motor, the cutting disc and the cover for this disc, all mounted on a support equipped with handles.

The cutting-mitring machine, in accordance with the invention, is composed of a table provided with adjustable legs, thus providing a horizontal surface on which a set of rails are situated, with the wheels of a slide traversing along these rails. This slide is provided with one single slot to allow the passing of the cutting disc responsible for cutting the parts on board the slide and is operated manually together with the part it carries in order to pass this part below the work head.

The bottom of the table is occupied, the same as with known machines, by a certain amount of lubricant water by way of a bathtub, and in this bath is situated a pump which projects water towards the cutting disc while working.

This kind of pumps normally also pick up the debris caused by cutting, which means that they often become blocked. To prevent this risk, a U-shaped sectional part is situated on one side of this bath, welded to the side and forming a closed compartment, into which the water that overflows from the bathtub runs, logically without the debris caused by cuttig.

One of the sides of the U-shaped part is provided with a recess into which the pump is fitted, with its suction side towards the inside of the compartment. In this way, the water sucked in by the pump for lubrication is clean and for this reason the pump does not become blocked during operation and can carry out the cooling of the cutting disc to perfection.

At one side of the machine table and from the outside of this table, a pillar is fixed, which in its upper part is connected with a horizontal arm or support produced from square section tube, with this support acting as a base for the motor support, the motor, the cutting disc and its protective cover. To do this, the support that is at the top of the pillar is provided on one of its sides with a circular-shaped slot which is perfectly centred in relation to a vertical axis.

The support part for the motor is a tray, to the base of which the motor is fastened. This tray has walls which project from it and which are provided with at least one wide hole for the operator to insert his hand in operating the unit.

The tray is rectangular in shape and the motor occupies its lower part in a direction parallel to the support. One of the sides of the tray remains parallel to the plane of the support in which the circular-shaped slot is situated and on this side the tray is provided with a wide downward skird which rest on the support.

The skirt is provided with two pairs of holes, with each pair separated by some 25 mm. in a vertical line. Each pair of holes, both the upper ones and the lower ones, correspond with the circular-shaped slot in the support and receive a set of guide-bolts which pass through the slot and whose ends on the internal side of the support are connected by means of a flange.

The pairs of upper and lower holes in the skirt are arranged in accordance with a circular shape of the same radius as that of the circular-shaped slot.

The ficticious centre of both the circular-shaped slot in the support and the circular shaped arrangement of the upper and lower holes in the motor support, is to be found in the same plane as the face of the cutting disc and near its cutting periphery.

The motor support can be situated on the circular-shaped slot through either the upper holes in the skirt or through the lower holes. By doing this, a cutting disc of either 350 mm. or of 300 mm. respectively, can be fitted.

As regards the holes in the skirt of the motor support, when the motor is horizontal with the cutting disc forming an angle of 90^{º} with the slide, the two holes on one side match the vertical position of the disc and the other two remain near the end of the circular-shaped slot in the support. When the motor support is turned or pivoted, their positon is inverted, with which the cutting disc adopts a position at an angle of 45^{º} to the machine slide.

The circular-shaped slot in the support covers an angle of slightly more than 90^{º}, which means that from its centre to each of its ends is slightly more than 45^{º}. Depending on how the motor support is turned or pivoted on the support, the disc will finish forming an angle of 45^{º} on each side of the vertical.

To make the correct positioning of the cutting disc easier in these two possible positions, regulating stops are fitted at each end of the support, with the previously-mentioned dolly-flange resting on these regulating stops.

The tray which forms the motor support is provided with a set of notches in one of its side walls entrusted with receiving the protective cover for the cutting disc by means of some bolts or screws secured with wing nuts.

These and other details of the patent will be appreciated more clearly on the attached sheet of drawings, in which, with a non-restrictive nature, the following are shown:
- Figure 1 is a front view of the machine, showing the cutting disc in the vertical position.
- Figure 2 is another front view with the cutting disc moved to an angle of 45^{º} from the vertical.
- Figure 3 is a side view of the machine.
- Figure 4 is a perspective of the motor support.
- Figure 5 is a perspective of the U-shaped part used for posotioning the pump.

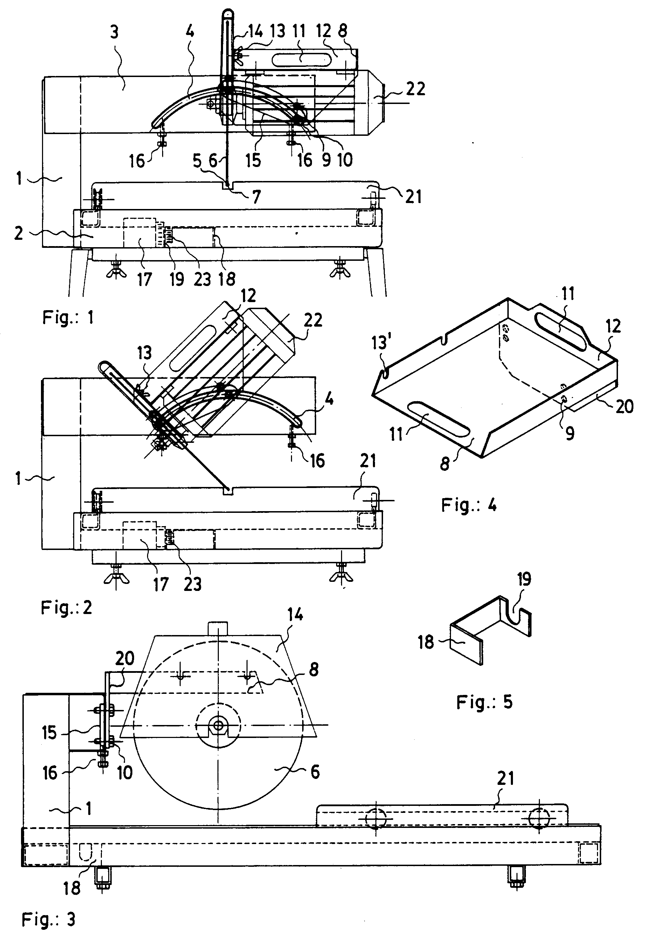

In accordance with figure 1, it can be appreciated the cutting-mitring machine with the table (2) mounted on its support legs (not numbered), with the pillar (1) projecting out from this table and finishing in the support (3) which is positioned transversally in relation to the table (2). On the table (2) is situated the slide (21) that receives the parts to be cut, with a set of wheels that traverse along guide rails.

The bottom of the table (2), shaped like a bathtub, holds the U-shaped part (18) shown in figure 5, fixed to one side, forming a compartment. The U-shaped part (18) is provided with a semi-circular slot (19) in which the pump (17) is housed in such a way that its suction area (23) is on the same side as this compartment, into which clean water overflows from the bathtub.

On the support (3) it can be seen the circular-shaped slot (4), as well as the motor support (8) and the motor (22) mounted onto the lower face of the support. The cutting disc (6) is connected to the drive output of the motor (22) and a protective part (14) covers the disc fastened by the wing nuts (13) to the motor support (8). This motor support (8) is provided with a wall (12) in which an opening (11) has been made for handling the unit.

Also in figure 1, it can be seen the stop (16) for the dolly-flange (15) with the bolts (10) to which it is secured, with (6) representing the face of the disc and (7) representing the cutting periphery of the said disc (6).

In figure 2, it can be seen the motor support turned 45º towards the left with the pump (17)-(23) at the base of the bathtub and the slide (21). The position of the cutting disc can be appreciated, together with that of the wing nuts (13) that fasten the protective cover over the disc, the circular-shaped slot (4) and the right stop (16) for the dolly-flange, the motor (22) and the side (12) of the motor support.

Figure 3 shows the U-shaped part (18) of the bathtub, as well as the slide (21) on the table. This side view makes it possible to see the side arrangement of the pillar (1) and the transversal support which is mounted on it. On the inside of this support we can see the dolly-flange (15) and also the bolts (10) that connect this dolly-flange (15) to the skirt (20) of the motor support and the regulating stops (16) that make contact with the said dolly-flange.

To change the disc, first the bolts (10) will be loosened and the motor support will be either raised or lowered in order to situate the upper or lower holes over the circular-shaped slot (4). If fixing is carried out using the upper holes in the skirt (9), the corresponding disc will be of 350 mm. diameter, whereas if fixing is carried out on the lower holes, the disc to be used will have a diameter of 300 mm.

If figure 3 we can also see the protective cover (14) for the cutting disc (6) and its relative position as regards the motor support (8).

In figure 4, the motor support (8) is shown in a perspective view, in which the notches (13′) that receive the bolts and wing nuts (13) to fasten the support (8) to the protective cover (14), can be appreciated. This figure also shows the openings (11) used for handling the motor assembly, motor support, cutting disc and protective cover, as well as the skirt (20) with the pairs of holes (9) through which the bolts (10) are passed to connect the motor support (8) to the dolly-flange (15) by passing through the slot (4) in the support (3).

The U-shaped part (18) which can be seen in figure 5 shows the semi-circular slot (19), into which the pump (17) is housed by means of its front neck and behind its suction area (23).

## Claims

1. A cutting-mitring machine, which has a work head provided with a motor (22) that drives a cutting disc (6), and a slide (21) which moves along a table (2) on its chassis on which the parts to be cut are placed, with the slide traversing towards the said cutting disc, said work head consisting of a pillar (1) at one end side of the table and a horizontal tranversal arm or support (3), raised above the table and the slide and in transversal position to the moving direction of the slide, which is characterized in that it includes
- a slot (4) in the front face or surface of the arm (3) , taking the shape of a circular section, in which are housed, with the possibility of travelling along the said slot, a set of guide bolts (10) which are connected to a rear skirt or plate (20) of a member (8), which holds the motor (22) and the cutting disc (6), in that the artificial or theoretical centre of said slot (4) coincides with the face of the cutting disc and is situated close to its cutting periphery, in that the rear plate (20) includes at least two holes (9) to allow the bolts (10) to pass through,
- a dolly-flange (15) arranged behind the face or surface of the arm (3) in which the slot (4) is cut, provided with two holes to allow the guide bolts (10) to pass through,
- stops (16) situated in the rear area of the arm (3), for fixing the end positions of the dolly-flange,
- another pair of holes (9) in the rear skirt or plate (20) of the member (8), at a different height in relation to the previous ones, for enabling the use of cutting discs of different diameters,
- a flat portion of the member (8) in whose lower face is housed a motor (22), two openings (11) in the form of handles, and a side member, at the side of the disc (6), provided with slanting notches (13') in which a protective part or guard (14) for the cutting disc is housed and secured by bolts.

## Patentansprüche

1. Gehrungsschneidgerät bestehend aus einem Kopfstück (22), das mit einer Schneidscheibe (6) ausgerüstet ist, welche vom Motor (6) angetrieben ist, und aus einem entlang des Tisches (2) verfahrbaren Schlitten (21), auf dem sich eine Ablegevorrichtung für die zu schneidenten Teile befindet, so dass der Schlitten sich zu der Schneidescheibe bewegt, dass das Kopfstück über eine Säule (1) an einem der Tischranden verfügt, sowie einen quer über dem Tisch und dem Schlitten gelegenen Horizontalarm oder Stütze (3), quer zur Arbeitsrichtung des Schlittens, durch folgende Teile gekennzeichnet:
- eine kreisförmige Nute (4) an der Frontseite des Armes (3) in der ein Satz Führungsbolzen (10) beweglich gelagert ist, der mit einem Blech oder einer Platte (20) eines Glieders (8) an der Hinterseite gekoppelt ist, in dem der Motor (22) und die Schneidescheibe unterbracht sind, dass die theroretische Mitte der Nute (4) mit der Fläche der Schneidescheibe übereinstimmt und unmittelbar an der Scheideurnfang liegt, dass die hintere Platte (20) mindestens zwei Bohrungen (9) aufweisst, damit die Bolzen (10) durchgehen können,
- eine Befestigungsflansche (15) hinter der Fläche oder Oberfläche des Armes (3) in dem sich die Nute (4) befindet, die mit zwei Bohrungen versehen ist, damit die Führungsbolzen (10) durchgehen Können,
- Anschläge (16) an dem hinteren Teil des Armes (3) für die Befestigung der Flansche in den Endstellen,
- ein weiteres Paar Bohrungen (9) an dem hinteren Blech bzw, an der hinteren Platte (20) des Glieders (8), aber an ungleicher Höhe der früheren Bohrungen, um den Einsatz verschiedener Schneidescheiben-durchmesser zu ermöglichen,
- ein flaches Teil des Glieders (8) , in dessen unterem Teil der Motor (22) untergebracht ist, zwei grifförmige Öffnungen (11) und ein seitliches Stück seitens der Scheibe (6), das mit schräge Nuten (13') versehen ist, in denen die Schutzvorrichtung (14) der Schneidescheibe untergebracht und mit Bolzen gesichert.

## Revendications

1. Une poinçonneuse à onglet, ayant une tête de travail dotée d'un moteur (22), qui quide un disque de coupe (6), et un chariot (21), lequel se déplace le long d'une table (2) sur son chàssis sur lequel les pièces se trouvent placées, le chariot allant en transversale jusqu'à ce même disque de coupe, ladite tête de travail consistant en un pilier (1) à l'une des extrémités de table et d'un bras transversal horizontal ou support (3), s'élevant au dessus de la table et le chariot en position transversale, dans le sens dans lequel évelue le chariot, caractérisé par le fait qu'il comprend,
- une fente (4) sur la partie antérieure ou surface du bras (2), prenant la forme d'une section circulaire, dans laquelle sont logés, en ayant la possibilité de se déplacer le long de ladite fente, un ensemble de boulons de guidage (10) reliés à une jupe ou fame arrière (20) d'une pièce (8), qui supporte le moteur (22) et le disque de coupe (6), sachant que le centre artificiel ou théorique de cette même fente (4) coincide avec la face du disque de coupe et se trouve située à sa périphérie de coupe, sachant que la lame arrière (20) est munie d'au moins deux trous (9) afin de laisser passer les boulons (10),
- une poupée-collerette installée à l'arrière de la face ou surface du bras (3) dans laquelle la fente (4) est coupée et dotée de deux trous afin de laisser passer les boulons de guidage,
- hutées (16) situées sur l'espace arrière du bras (3) afin de fixer les positions do bout de course de la poupée-collerette,
- une autre paire de trous (9) sur la jupe arrière ou lame (20) du bras (8), à une hauteur différente par rapport aux premiers, afin de permettre le fonctionnement de disques de coupe de différents diamètres,
- une partie plane de la pièce (8) à la face inférieure de laquelle se trouve logé un moteur (22), deux ouvertures (11) en forme de poignées, et une pièce latérale, sur un côte du disque (6), pourvue d'encoches bridées (13') dont une partie de protection ou de garde (14) pour le disque de coupe est logée et assurée par les écrous.
